Europäisches Patentamt

European Patent Office

Office européen des brevets

(19)

(11) Veröffentlichungsnummer : **0 074 524**
**B1**

(12) # EUROPÄISCHE PATENTSCHRIFT

(45) Veröffentlichungstag der Patentschrift :
21.11.85

(21) Anmeldenummer : 82107733.6

(22) Anmeldetag : 24.08.82

(51) Int. Cl.⁴ : **G 01 L  5/00**, B 23 B 25/06//
G01L25/00

(54) **Vorrichtung zum Messen der Spannkraft.**

(30) Priorität : 12.09.81 DE 3136286

(43) Veröffentlichungstag der Anmeldung :
23.03.83 Patentblatt 83/12

(45) Bekanntmachung des Hinweises auf die Patenterteilung : 21.11.85 Patentblatt 85/47

(84) Benannte Vertragsstaaten :
CH FR GB IT LI SE

(56) Entgegenhaltungen :
US-A- 4 232 547

(73) Patentinhaber : **Paul Forkardt GmbH & Co. KG**
**Rosenstrasse 44-46**
**D-4000 Düsseldorf 1 (DE)**

(72) Erfinder : **Steinberger, Josef**
**Sebastiansweg 30**
**D-4000 Düsseldorf 1 (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

EP 0 074 524 B1

## Beschreibung

Die Erfindung betrifft eine Vorrichtung zum Messen der an radial nach innen beweglich geführten Spannelementen von Spannvorrichtungen auftretenden Kraft mittels eines Kraftaufnehmers.

Aus der US-A-4 232 547 ist eine derartige Vorrichtung bekannt, wobei der Kraftaufnehmer in einem Gehäuse mit im wesentlichen radialer Ausrichtung fest angeordnet ist, sich an seinem innenliegenden Ende am Gehäuse abstützt und an seinem außenliegenden Ende mit einem Druckstück versehen ist, das mit einem der Spannelemente der Spannvorrichtung zusammenwirkt. Da diese Vorrichtung zum Messen der Spannkraft an einer Spannvorrichtung mit drei Spannelementen bestimmt ist, sind auch drei Kraftaufnehmer vorgesehen, die untereinander mittels einer komplizierten Schaltung verbunden sind.

Diese aus der US-A-4 232 547 bekannte Vorrichtung hat den Nachteil, daß sie einerseits nur zum Messen der Spannkraft von Spannvorrichtungen mit drei Spannelementen geeignet ist und daß sie andererseits nur eingesetzt werden kann, wenn diese drei Spannelemente auf einen vorgegebenen Spanndurchmesser eingestellt sind, der den gegebenen Abmessungen der Vorrichtung entspricht. Es können somit weder die Spannkräfte von sogenannten Zweibacken-Spannfuttern oder Fünfbacken-Spannfuttern gemessen werden, noch ist eine Messung möglich, wenn die Spannbacken des Dreibackenfutters eine Einstellung besitzen, die größer oder kleiner als der Durchmesser der bekannten Vorrichtung ist. Da die von einer Spannvorrichtung erzeugten Spannkräfte jedoch auch abhängig von der jeweiligen Stellung der Spannelemente sind, läßt sich mit der bekannten Vorrichtung nur ein von dessen Abmessungen vorgegebener Spannzustand ordnungsgemäß erfassen, so daß die bekannte Vorrichtung in der Praxis nicht verwendbar ist. Ein entscheidender Nachteil der bekannten Konstruktion liegt schließlich in ihrem teuren und komplizierten Aufbau insbesondere durch die Verwendung mehrerer Kraftaufnehmer.

Ausgehend von dem aus der US-A-4 232 547 bekannten Stand der Technik liegt der Erfindung die Aufgabe zugrunde, die bekannte Vorrichtung hinsichtlich ihres Aufbaus zu vereinfachen und derart auszugestalten, daß sie jeweils unmittelbar an der jeweiligen Spannstelle der Spannelemente angesetzt werden kann, an der später das Werkstück anliegt, ohne daß hierbei die Spannelemente in der Spannvorrichtung versetzt werden müssen, wobei gleichzeitig die Messung der Spannkräfte auch von anderen als Dreibackenfuttern ermöglicht werden soll.

Zur Lösung dieser Aufgabenstellung wird mit der Erfindung eine Vorrichtung der eingangs beschriebenen Art vorgeschlagen, welche folgende Merkmale umfaßt:

ein mit seinem peripheren Bereich anstelle des Werkstücks in die Spannvorrichtung einspannbares scheibenförmiges Gehäuse (1), welches in dem genannten Bereich jeweils in möglichen Angriffspunkten der Spannelemente entsprechenden Positionen mit Kopplungseinrichtungen (5) für Druckstücke (6) sowie mit einer Einsatzöffnung (1b) für einen Kraftaufnehmer (2) versehen ist, und

einen in der Einsatzöffnung (1b) fest eingebauten, sich an seinem inneren Ende im Gehäuse (1) abstützenden und an seinem äußeren Ende mit einer weiteren Kopplungseinrichtung (3) für ein auswechselbares Druckstück versehenen einzigen Kraftaufnehmer (2) zur Erfassung der Spannkraft eines mit ihm über ein angekoppeltes Druckstück in Eingriff gebrachten Spannelements.

Mit diesem Vorschlag der Erfindung werden nicht nur die bisherigen drei Kraftaufnehmer durch einen einzigen Kraftaufnehmer ersetzt, sondern es wird die Möglichkeit geschaffen, die erfindungsgemäße Vorrichtung sowohl für Spannvorrichtungen mit drei Spannelementen als auch für Spannvorrichtungen mit zwei, vier, fünf und sechs Spannelementen zu verwenden. Dies wird dadurch ermöglicht, daß in jedem Fall nur ein einziger Kraftaufnehmer vorhanden ist. Dieser mit einem Druckstück versehene Kraftaufnehmer wirkt mit einem Spannelement der jeweiligen Spannvorrichtung zusammen. Um die erfindungsgemäße Vorrichtung bei einem Dreibackenfutter zu verwenden, ist es erforderlich, zwei weitere Druckstücke am Gehäuse anzuordnen, wozu dieses mit entsprechenden Anschlüssen versehen ist.

Die Vorteile des erfindungsgemäßen Vorschlages sind somit darin zu sehen, daß die Vorrichtung an Spannvorrichtungen mit einer unterschiedlichen Anzahl von Spannelementen verwendet werden kann, ohne daß es zu diesem Zweck erforderlich ist, den eigentlichen Kraftaufnehmer umzurüsten oder auszubauen. Es ist lediglich erforderlich, die ausschließlich am Gehäuse anzusetzenden Druckstücke, die keine Verbindung mit dem Kraftaufnehmer haben, entsprechend dem jeweiligen Anwendungsfall am Gehäuse anzubringen bzw. umzusetzen.

Mit dem Vorschlag der Erfindung wird eine Vorrichtung zum Messen der Spannkraft geschaffen, die bei konstruktiv einfachem Aufbau nicht nur klein und handlich ist, sondern an der jeweiligen Spannstelle der Spannelemente der zu überprüfenden Spannvorrichtung angesetzt werden kann, auch wenn es sich hierbei um kleine Spannelemente handelt oder um zu einem Backenfutter gehörende Spannbacken mit abgestuften Spannflächen. Insbesondere bei weit ausladenden Spannelementen, welche das Getriebe zur Übertragung der Spannkraft mit erhöhter Reibung belasten, wird auf diese Weise eine exakte Messung der aufbringbaren Spannkraft möglich.

Gemäß einer speziellen Ausführungsform der Erfindung ist der Kraftaufnehmer mit Anpassungswiderständen verbunden, die zentral im Gehäuse angeordnet sind. Hierdurch wird der konstruktive Aufwand der erfindungsgemäßen Vorrichtung vereinfacht und eine günstige Möglichkeit geschaffen, den Kraftaufnehmer durch Anpassungswiderstände zu eichen.

Bei einer bevorzugten Ausführungsform der Erfindung sind an die Kopplungseinrichtungen des Kraftaufnehmers bzw. des Gehäuses anschließbare Zwischenstücke vorgesehen, die ihrerseits Anschlüsse für die Druckstücke aufweisen. Hierdurch ist es möglich, durch den Einsatz unterschiedlicher oder mehrerer Zwischenstücke den jeweiligen Durchmesser der Vorrichtung in Übereinstimmung mit dem Durchmesser des einzuspannenden Werkstückes zu bringen, so daß bei der Spannkraftmessung dieselben Randbedingungen vorliegen, wie bei der späteren Einspannung der Werkstücke.

Auf der Zeichnung ist ein Ausführungsbeispiel der erfindungsgemäßen Vorrichtung dargestellt, und zwar zeigen :

Figur 1 einen schematischen Längsschnitt durch eine bevorzugte Ausführungsform der zum Messen der Spannkraft eines Backenfutters eingesetzten Vorrichtung und

Figur 2 eine Stirnansicht der Vorrichtung gemäß dem Pfeil II — in Fig. 1.

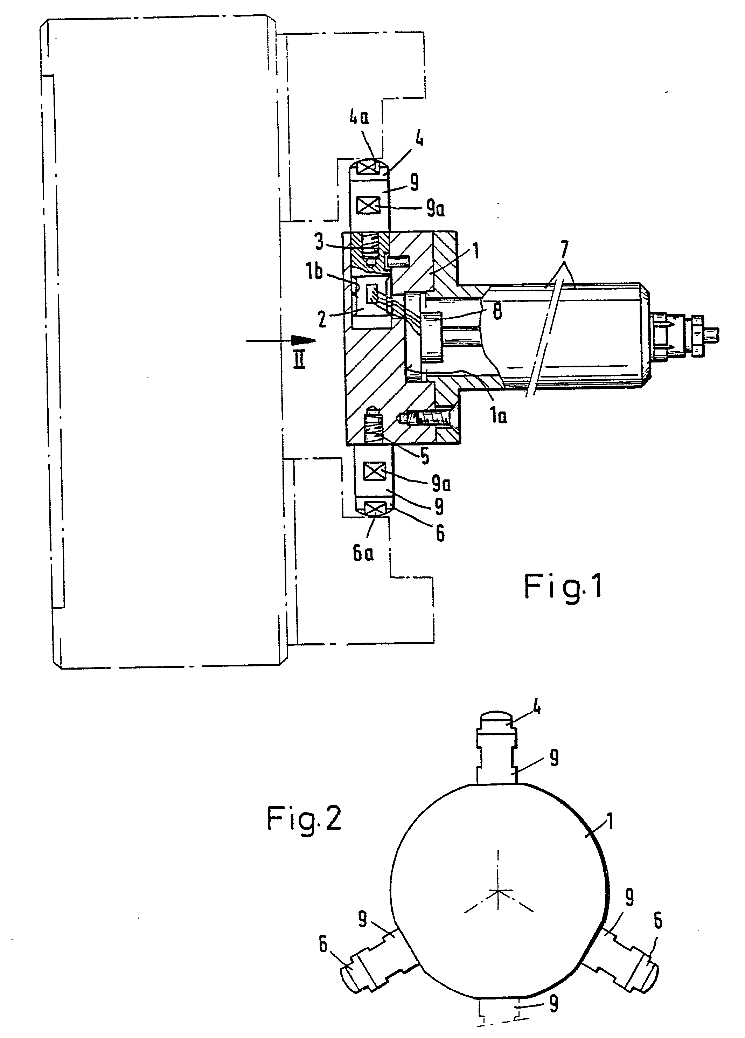

Mit der in der Zeichnung dargestellten Vorrichtung wird die Spannkraft von Spannvorrichtungen gemessen, beispielsweise eines Dreibackenfutters, wie es mit strichpunktierten Linien in Fig. 1 der Zeichnung dargestellt ist.

Bei den hohen Zerspannungsleistungen moderner Werkzeugmaschinen sind hohe Spannkräfte zum Festhalten der Werkstücke erforderlich. Diese Spannkräfte werden nur durch gute Gleiteigenschaften an den kraftübertragenden Flächen der Spannvorrichtungen erreicht, weil der jeweilige Schmierzustand im Getriebe, welches die von einem Krafterzeuger erzeugte Kraft auf die Spannelemente der Spannvorrichtung überträgt, einen großen Einfluß auf die Größe der Spannkraft hat. Durch das Vorhandensein von Fett, das die Reibung im Getriebe wesentlich herabsetzt, wird eine hohe Spannkraft erreicht. Das Fett bleibt durch die hohe Flächenbelastung und auch durch äußere Einflüsse, wie beispielsweise Kühlmittelberührung, nicht immer an den Gleitflächen haften. Der Wirkungsgrad des Futters, d. h. der Übersetzungsfaktor zwischen der vom Krafterzeuger erzeugten Axialkraft und der entstehenden radialen Spannkraft für das Festhalten des Werkstückes, fällt deshalb mit der Anzahl der Spannvorgänge ab.

Da dieser Spannkraftabfall auftritt, obwohl der vorgeschriebene Druck im Krafterzeuger vorhanden ist, reicht eine Überwachung des Krafterzeugers nicht aus, um die notwendigen Rückschlüsse auf die von der Spannvorrichtung erzeugte Haltekraft zu ziehen. Zu diesem Zweck werden Spannkraftmesser verwendet.

Der auf der Zeichnung dargestellte Spannkraftmesser besitzt ein scheibenförmiges Gehäuse 1, welches mit einer axialen Anbohrung 1a und einer radialen Bohrung 1b versehen ist. In der radialen Anbohrung 1b ist ein Kraftaufnehmer 2 angeordnet, der sich an seinem radial innen liegenden Ende im Gehäuse 1 abstützt.

Am radial außen liegenden Ende des Kraftaufnehmers 2 ist ein Anschluß 3 für ein Druckstück 4 vorgesehen, wobei der Anschluß 3 als eine Gewindebohrung ausgeführt ist. Mindestens ein entsprechender Anschluß 5 befindet sich auch am Gehäuse 1, welches auf diese Weise mit einem oder mehreren gleichartigen Druckstücken 4 versehen werden kann. Die Anzahl und Lage der Anschlüsse 5 richtet sich danach, wieviele Druckstücke 4 bzw. 6 vorhanden sind. Beim Ausführungsbeispiel sind mit ausgezogenen Linien drei Druckstücke 4 bzw. 6 gezeichnet, da es sich bei dem zu messenden Backenfutter um ein Dreibackenfutter handelt. Mit strichpunktierten Linien ist in Fig. 2 dargestellt, daß das Gehäuse 1 mit nur einem Anschluß 5 für ein Druckstück 6 versehen ist. Eine solche Ausführungsform dient zur Spannkraftmessung an einem Zweibackenfutter oder einer entsprechenden Spannvorrichtung, wie beispielsweise einem Schraubstock.

An die hintere Stirnfläche des Gehäuses 1 ist eine griffartige Verlängerung 7 angeschraubt, welche die Handhabung der Vorrichtung erleichtert und die axiale Anbohrung 1a verschließt. In dieser axialen Anbohrung 1a befinden sich Anpassungswiderstände 8, mit denen der auf der Basis der Umwandlung mechanischer Kenngrößen in elektrische Größen arbeitende Kraftaufnehmer 2 geeicht werden kann.

Mittels der Druckstücke 4 bzw. 6 wird die Vorrichtung exakt an denjenigen Stellen der Spannelemente der Spannvorrichtungen angesetzt, die später zum Halten des Werkstückes verwendet werden. Beim dargestellten Ausführungsbeispiel handelt es sich um die mittlere Stufe der abgestuften Spannbacken, wie aus Fig. 1 hervorgeht. Um den Durchmesser der Meßvorrichtung etwa dem jeweiligen Durchmesser der einzuspannenden Werkstücke anpassen zu können, werden Zwischenstücke 9 verwendet, die in die Anschlüsse 3 bzw. 5 des Kraftaufnehmers 2 bzw. des Gehäuses 1 passen und ihrerseits entsprechende Anschlüsse für die Druckstücke 4 bzw. 6 aufweisen. Um das Auswechseln sowohl der Druckstücke 4 und 6 als auch der Zwischenstücke 9 zu erleichtern, sind diese mit Schlüsselflächen 4a, 6a, bzw. 9a versehen.

Durch die voranstehend beschriebene Ausbildung ist es möglich, die Vorrichtung zum Messen der Spannkraft nicht nur an die jeweiligen Druchmesser der einzuspannenden Werkstücke anzupassen, sondern auch an denjenigen Stellen der Spannelemente anzusetzen, die später zum Halten der Werkstücke verwendet werden. Dies hat zur Folge, daß einerseits ein Umsetzen und Verstellen der Spannelemente der Spannvorrichtungen entfällt und andererseits realistische Meßwerte erzielt werden, weil der Meßzustand der Spannvorrichtung dem späteren Arbeitszustand entspricht.

## Patentansprüche

1. Vorrichtung zum Messen der von einer Spannvorrichtung mit radial bezüglich einer zentralen Achse der Spannvorrichtung bewegbaren Spannelementen auf ein Werkstück ausgeübten Spannkräfte, welche folgende Merkmale umfaßt :

ein mit seinem peripheren Bereich anstelle des Werkstücks in die Spannvorrichtung einspannbares scheibenförmiges Gehäuse (1), welches in dem genannten Bereich jeweils in möglichen Angriffspunkten der Spannelemente entsprechenden Positionen mit Kopplungseinrichtungen (5) für Druckstücke (6) sowie mit einer Einsatzöffnung (1b) für einen Kraftaufnehmer (2) versehen ist, und

einen in der Einsatzöffnung (1b) fest eingebauten, sich an seinem inneren Ende im Gehäuse (1) abstützenden und an seinem äußeren Ende mit einer weiteren Kopplungseinrichtung (3) für ein auswechselbares Druckstück versehenen einzigen Kraftaufnehmer (2) zur Erfassung der Spannkraft eines mit ihm über ein angekoppeltes Druckstück in Eingriff gebrachten Spannelements.

2. Vorrichtung nach Anspruch 1, dadurch gekennzeichnet, daß der Kraftaufnehmer (2) mit Anpassungswiderständen (8) verbunden ist, die zentral im Gehäuse (1) angeordnet sind.

3. Vorrichtung nach Anspruch 1 oder 2, dadurch gekennzeichnet, daß an die Kopplungseinrichtungen (3 bzw. 5) des Kraftaufnehmers (2) bzw. des Gehäuses (1) anschließbare Zwischenstücke (9) vorgesehen sind, die ihrerseits Anschlüsse für die Druckstücke (4 bzw. 6) aufweisen.

## Claims

1. Device for measuring the clamping forces exerted on a work piece by a clamping device with clamping elements movable radially of a central axis of the clamping device, which comprises the following features :

a disc-shaped housing (1) adapted to have its peripheral region clamped into the clamping device in place of the workpiece and which, in the said region, is provided at positions corresponding to possible points of application of the clamping elements with coupling means (5) for thrust pieces (6) and with an insertion opening (1b) for a force pickup (2), and

a single force pickup (2) rigidly fitted in the insertion opening (1b) with its inner end braced in the housing (1) and its outer end provided with a further coupling means (3) for an interchangeable thrust piece, for detecting the clamping force of a clamping element brought into engagement with it through a coupled-on thrust piece.

2. Device according to Claim 1, characterized in that the force pickup (2) is connected to adapting resistors (8) which are disposed centrally in the housing (1).

3. Device according to Claim 1 or 2, characterized in that intermediate pieces (9) are provided which can be connected to the coupling means (3 and/or 5) of the force pickup (2) and/or of the housing (1) and which in turn comprise connections for the thrust pieces (4 and/or 6).

## Revendications

1. Dispositif pour la mesure des forces exercées sur une pièce à usiner par un dispositif de serrage comportant des éléments de serrage pouvant être déplacés radialement par rapport à un axe central du dispositif de serrage, qui comprend les caractéristiques suivantes :

un boîtier (1) en forme de disque et pouvant être serré sur sa zone périphérique dans le dispositif de serrage à la place de la pièce à usiner et qui, dans la zone précitée, est muni pour chacune des positions correspondant aux points d'attaque possibles des éléments de serrage de dispositifs de couplage (5) pour des pièces de serrage (6) ainsi que d'une ouverture d'insertion (1b) pour un transducteur de force (2), et

un transducteur de force unique (2) monté à demeure dans l'ouverture d'insertion (1b), s'appuyant à son extrémité intérieure dans le boîtier (1) et muni à son extrémité extérieure d'un dispositif de couplage (3) supplémentaire pour une pièce de pression interchangeable en vue de mesurer la force de serrage d'un élément de serrage mis en contact avec lui par l'intermédiaire d'une pièce de pression accouplée.

2. Dispositif selon la revendication 1, caractérisé en ce que le transducteur de force (2) est relié à des résistances d'adaptation (8) qui sont disposées de manière centrale dans le boîtier (1).

3. Dispositif selon l'une des revendications 1 ou 2, caractérisé en ce que l'on prévoit sur les dispositifs de couplage (3, 5) du transducteur de force (2) ou du boîtier (1) des pièces intermédiaires raccordables (9) qui présentent elles-mêmes des raccords pour les pièces de pression (4, 6).

Fig.1

Fig.2